# DEMANDE DE BREVET EUROPEEN

(11) **EP 1 155 932 A1**
(43) Date de publication de la demande: **21.11.2001**
(21) Numéro de dépôt: 01201331.4
(22) Date de dépôt: 11.04.2001
(51) Int. Cl.: B60S 1/34

(54) **Palier pour le guidage en rotation et le positionnement axial d'un arbre tournant**

(30) Priorité: 21.04.2000 FR 0005146
(71) Demandeur: VALEO SYSTEMES D'ESSUYAGE, 78321 La Verrière (FR)
(72) Inventeur: Renoux, Pascal, 86100 Chatellerault (FR)
(74) Mandataire: Lemaire, Marc

(57) **Abrégé**

L'invention concerne un palier (10) pour le guidage en rotation et le positionnement axial d'un arbre tournant (18), notamment d'un arbre d'entraînement d'un mécanisme d'essuie-glace de véhicule automobile, du type comportant un corps (12) de palier (10) qui comporte un trou (14) dans lequel l'arbre tournant (18) est guidé en rotation autour de son axe (A), et dont la position axiale par rapport au corps (12) de palier (10) est déterminée par une bague d'arrêt (40) qui coopère avec une gorge radiale (42) de l'arbre tournant (18) et qui prend appui axialement sur une face annulaire (44) d'extrémité supérieure du corps (12) de palier (10), avec interposition d'une rondelle (46), caractérisé en ce que la rondelle (46) est arrêtée en rotation par rapport au corps (12) de palier (10).

## Description

L'invention propose un palier pour le guidage en rotation et le positionnement axial d'un arbre tournant.

L'invention propose plus particulièrement un palier pour le guidage en rotation et le positionnement axial d'un arbre tournant, notamment d'un arbre d'entraînement d'un mécanisme d'essuie-glace de véhicule automobile.

De manière connue, les essuie-glaces de véhicule automobile sont entraînés en rotation alternée et sont guidés notamment par un palier.

Le palier comporte un corps dans lequel est réalisé un perçage axial qui permet le guidage en rotation d'un arbre d'entraînement d'un bras d'un essuie-glace. Des douilles tubulaires de guidage sont agencées radialement dans le perçage entre le corps et l'arbre d'entraînement de façon à minimiser les efforts résistants de frottement existant entre les parois en vis-à-vis de deux éléments.

L'arbre d'entraînement est arrêté en position axiale vers le bas, c'est-à-dire dans la direction opposée au bras d'essuie-glace, par une bague d'arrêt dont la zone intérieure coopère radialement avec une gorge radiale réalisée dans l'arbre d'entraînement et qui prend appui axialement sur une face annulaire d'extrémité supérieure du corps de palier, avec interposition d'une rondelle.

Un tel type de palier permet d'entraîner correctement le bras d'essuie-glace. Cependant, l'arbre d'entraînement et/ou la bague d'arrêt entraîne la rondelle en rotation par rapport au corps ce qui provoque des frottements et une usure de la face annulaire d'extrémité supérieure du corps du fait de la nature différente des matériaux en contact.

Cela a notamment pour conséquence la formation de morceaux tels que de la poussière ou des copeaux du matériau constituant le corps. Les morceaux peuvent alors se loger à l'interface entre l'arbre d'entraînement et les douilles annulaires provoquant ainsi une dégradation de ces dernières, et l'apparition d'un jeu radial.

L'usure de la face annulaire d'extrémité supérieure du corps ainsi que l'apparition du jeu radial entre les douilles annulaire et l'arbre d'entraînement diminuent la durée de vie du palier.

De plus, il est fréquent qu'un capuchon permette de protéger l'extrémité supérieure du palier contre des pollutions extérieures. Cependant, un tel capuchon ne comporte pas d'arrêt spécifique en translation. Ainsi, dans certains cas, il peut se soulever et quitter la position dans laquelle il protège correctement le palier.

Dans le but de remédier à ces inconvénients, l'invention propose un palier pour le guidage en rotation et le positionnement axial d'un arbre tournant, notamment d'un arbre d'entraînement d'un mécanisme d'essuie-glace de véhicule automobile, du type comportant un corps de palier qui comporte un trou dans lequel l'arbre tournant est guidé en rotation autour de son axe, et dont la position axiale par rapport au corps de palier est déterminée par une bague d'arrêt qui coopère avec une gorge radiale de l'arbre tournant et qui prend appui axialement sur une face annulaire d'extrémité supérieure du corps de palier, avec interposition d'une rondelle, caractérisé en ce que la rondelle est arrêtée en rotation par rapport au corps de palier.

Selon d'autres caractéristiques de l'invention :
- la rondelle se prolonge, à sa périphérie extérieure, par une jupe cylindrique qui s'étend axialement vers le bas et qui est montée serrée sur le tronçon d'extrémité supérieure du corps de palier ;
- le palier comporte un capuchon de protection et d'étanchéité qui est traversé par l'arbre tournant, et dont une partie inférieure vient en contact avec la paroi cylindrique extérieure du tronçon d'extrémité supérieure du corps, et la jupe de la bague d'arrêt retient axialement vers le haut la partie inférieure du capuchon ;
- la rondelle est bombée avec sa convexité orientée vers le haut, et la bague d'arrêt est en appui axial sur le sommet de sa face supérieure ;
- la bague d'arrêt consiste en un anneau élastique ouvert ;
- la bague d'arrêt consiste en un anneau élastique qui comporte des griffes qui sont réparties sur sa périphérie intérieure et qui coopèrent avec le fond de la gorge pour immobiliser l'anneau par rapport à l'arbre.

D'autres caractéristiques et avantages de l'invention apparaîtront à la lecture de la description détaillée qui suit pour la compréhension de laquelle on se reportera aux dessins annexés parmi lesquels :
- la figure 1 est une vue en perspective et en coupe partielle d'un palier d'entraînement d'un essuie-glace selon l'état de la technique ; et
- la figure 2 est une vue en perspective et en coupe partielle d'un palier d'entraînement d'un essuie-glace réalisé conformément aux enseignements de l'invention.

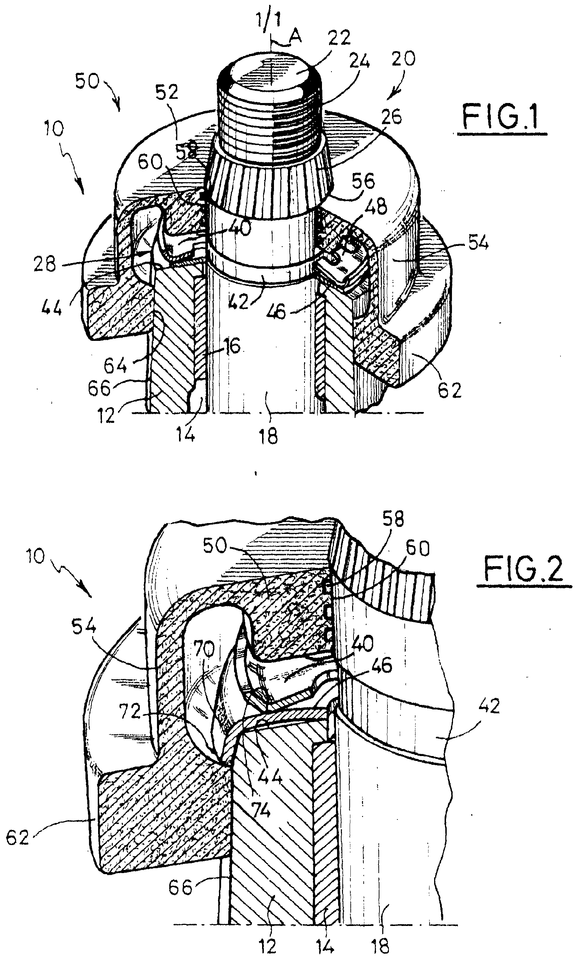

Dans la suite de la description, afin de faciliter sa compréhension ainsi que celle des revendications, on utilisera (à titre non limitatif) les termes « supérieur », « inférieur », « haut », « bas », « vertical » et « horizontal » conformément aux figures 1 et 2.

La figure 1 représente un palier 10 selon l'état de la technique.

Le palier 10 peut être, par exemple, un palier d'entraînement d'un essuie-glace, un palier de sortie d'un mécanisme ou d'un moto réducteur.

On décrira dans la suite, un palier d'entraînement 10 d'un essuie-glace, non représenté.

Le palier d'entraînement 10 comporte principalement un corps moulé 12 de palier dans lequel est réalisé un trou axial 14 vertical d'axe A, qui reçoit des douilles tubulaires 16, dont une seule est représentée à la figure 1, qui peuvent être du type coussinet ou bague autolubrifiée.

Un arbre tournant, ici d'entraînement 18 est reçu axialement par les douilles tubulaires de façon à être guidé en rotation autour de l'axe A.

L'arbre d'entraînement 18 comporte une partie supérieure 20 qui est prévue pour la fixation de la tête d'entraînement de l'essuie-glace, et une partie inférieure (non représentée) qui est solidaire en rotation d'un moyen d'entraînement moteur tel qu'une manivelle, une roue, ou un multiplicateur d'angle.

La partie supérieure 20 comporte successivement depuis son extrémité libre supérieure 22, un tronçon fileté 24 et un tronçon tronconique cannelé 26.

Le tronçon tronconique cannelé 26 coopère axialement avec une partie complémentaire de la tête d'entraînement du bras d'essuie-glace entraîné par le palier 10. Les cannelures permettent d'immobiliser en rotation le bras d'essuie-glace par rapport à l'arbre d'entraînement 18, lors du serrage axial vers le bas, de la tête d'entraînement du bras d'essuie-glace sur l'arbre d'entraînement 18, au moyen d'un élément de fixation tel qu'un écrou vissé sur le tronçon fileté 24.

Selon une variante, un organe intermédiaire, tel qu'une manivelle, peut être interposé entre le tronçon tronconique cannelé 26 et la tête d'entraînement du bras d'essuie-glace.

L'arbre d'entraînement 18 est arrêté en translation axiale par deux dispositifs d'arrêt situés axialement de part et d'autre du corps 12.

Le dispositif d'arrêt supérieur 28 peut comporter une bague d'arrêt 40 qui coopère avec une gorge radiale 42 de l'arbre d'entraînement 18 et qui prend appui axialement sur une face annulaire 44 d'extrémité supérieure du corps 12 de palier 10, avec interposition d'une rondelle 46.

De façon similaire, le dispositif d'arrêt inférieur non représenté, consiste par exemple en une bague d'arrêt qui coopère avec une gorge radiale inférieure de l'arbre d'entraînement et qui prend appui axialement sur une face annulaire d'extrémité inférieure du corps 12 du palier 10.

Lors du montage, le dispositif d'arrêt inférieur est fixé sur l'arbre d'entraînement 18 qui est alors introduit, ici de bas en haut, à l'intérieur du corps 12 et des douilles tubulaires 16 jusqu'à ce que le dispositif d'arrêt inférieur vienne au contact de la face annulaire d'extrémité inférieure du corps 12 du palier 10. Ainsi, la partie supérieure 20 dépasse axialement du corps 12. La rondelle 46 est alors posée sur la face annulaire 44 d'extrémité supérieure du corps 12, puis la bague d'arrêt 40 est mise en position de façon à minimiser le jeu axial entre l'arbre d'entraînement 18 et le corps 12.

La bague d'arrêt 40 peut consister en un anneau élastique ouvert de type "circlips" ou, en un anneau élastique, conformément à la figure 1, qui comporte des griffes 48 réparties sur sa périphérie intérieure et qui coopèrent avec le fonds de la gorge 42 pour l'immobiliser par rapport à l'arbre d'entraînement 18, une telle bague d'arrêt 40 étant appelée "griffaxe" 40.

Dans ce deuxième cas, le diamètre du cercle défini par l'extrémité intérieure des griffes 48 est inférieur au diamètre de la gorge radiale 42. Ainsi, la rondelle griffaxe 40 est emmanchée à force sur la partie supérieure 20 de l'arbre d'entraînement 18 et est descendu jusqu'à ce que sa face inférieure soit en contact avec la face supérieure de la rondelle 46. La forme de la rondelle griffaxe 40 bombée vers le bas permet d'assurer son immobilisation, vers le haut, par rapport à l'arbre 18 par coincement ou arc-boutement des griffes 48 sur la paroi cylindrique convexe de la gorge 42.

Cependant, la pression exercée par la bague d'arrêt 40 sur la rondelle 46 provoque l'entraînement de cette dernière en rotation lorsque l'arbre d'entraînement 18 tourne autour de l'axe vertical A.

De manière générale, le corps 12 de palier est réalisé par moulage par exemple d'un alliage léger tel que le zamak qui est un alliage d'aluminium et de magnésium, ou d'une matière plastique ou composite qui présente une dureté inférieure à celle de l'acier. Le frottement de la face inférieure de la rondelle 46, généralement en acier, sur la face annulaire 44 d'extrémité supérieure du corps 12 entraîne une usure de cette dernière.

Le frottement de la rondelle 46 sur la face annulaire 44 produits des particules telles que des poussières ou des copeaux de zamak dont certaines tombent dans l'interstice existant entre la paroi intérieure de l'extrémité supérieure du corps 12 et l'arbre 18, puis se logent entre les surfaces en contact mobile des douilles tubulaires 16 et de l'arbre 18. Ces particules s'incrustent alors dans les douilles tubulaires 16 et provoquent une usure prématurée de ces dernières.

De plus, l'usure axiale de la face annulaire 44 crée un jeu axial qui est nuisible au bon fonctionnement du palier d'entraînement 10.

De façon générale, un capuchon 50 de protection est d'étanchéité permet d'isoler l'extrémité supérieure du corps 12 du milieu ambiant extérieur.

Pour ce faire, le capuchon 50 est constitué d'une face supérieure transversale 52 depuis la périphérie de laquelle s'étend vers le bas une jupe cylindrique axiale 54.

La face supérieure transversale 52 comporte un trou central 56 qui permet le passage de la partie supérieure 20 de l'arbre 18. Des gorges 58 sont réalisées dans la face intérieure 60 du trou central 56. Elles permettent de limiter l'intrusion de particules polluantes, telles que des poussières ou de l'eau entre le capuchon 50 et l'extrémité supérieure du corps 12, de façon à protéger le contact mobile entre l'arbre d'entraînement 18 et les douilles tubulaires 16.

Une collerette radiale 62 s'étend sensiblement transversalement à l'extrémité libre inférieure de la jupe cylindrique axiale 54. Elle comporte une surface cylindrique axiale intérieure 64 qui est montée serrée autour de la paroi extérieure 66 de la partie supérieure du corps 12. Le serrage est suffisant pour immobiliser en rotation le capuchon 50 par rapport au corps 12 lorsque l'arbre d'entraînement 18 tourne autour de l'axe vertical A.

Cependant, le capuchon 50 n'est pas retenu axialement, vers le haut. Les vibrations produites en fonctionnement du palier 10 peuvent provoquer la montée progressive du capuchon 50 qui peut s'échapper et notamment entrer en contact avec le bras d'essuie-glace.

Pour supprimer le frottement de la face inférieure de la rondelle 46 sur la face annulaire 44 d'extrémité supérieure du corps 12, l'invention propose d'arrêter en rotation la rondelle 46 par rapport au corps 12 de palier.

Pour ce faire, et comme on peut voir à la figure 2, la rondelle 46 se prolonge à sa périphérie extérieure par une jupe cylindrique 70 qui s'étend axialement vers le bas et qui est montée serrée radialement autour du tronçon d'extrémité supérieur du corps 12 de palier.

Ainsi, lors de la rotation de l'arbre d'entraînement 18, c'est la face inférieure de la bague d'arrêt 40 qui frotte sur la face supérieure de la rondelle 46. Les matériaux qui constituent la bague d'arrêt 40 et la rondelle 46 étant généralement de l'acier, l'effort résistant de frottement, l'usure des deux éléments 40, 46 ainsi que la production de particules sont fortement réduits, voir supprimés.

La jupe cylindrique 70 permet aussi de former butée en translation axiale du capuchon 50. En effet, lors de la mise en place du capuchon 50 sur le tronçon d'extrémité libre supérieur de l'arbre d'entraînement 18, la collerette 62 est écartée radialement et élastiquement vers l'extérieur au contact de la face annulaire extérieure de la jupe cylindrique 70. Puis la collerette 62 revient en contact avec paroi extérieure 66 du corps 12.

L'extrémité libre inférieure de la jupe cylindrique 70 est alors en contact avec partie supérieure 72 de la collerette 62, formant ainsi un arrêt axial vers le haut du capuchon 50.

De plus, la rondelle 50 peut être bombée avec une convexité orientée vers le haut, de façon que la bague d'arrêt 40 est en appui axial sur le sommet 74 de sa face supérieure convexe.

La forme bombée de la rondelle 50 permet de lui conférer une élasticité axiale.

Lors de l'assemblage du palier d'entraînement 10, la bague d'arrêt 40 est en appui axial sur la rondelle 50 de façon à comprimer cette dernière vers le bas. Un tel montage permet de rattraper le jeu axial de l'arbre d'entraînement 18 par rapport au corps 12 lors de l'assemblage.

Avantageusement, la rondelle 50 est toujours comprimée après l'assemblage. Ainsi, elle permet de compenser une usure axiale progressive de l'un des éléments composant le palier d'entraînement 10 au cours de son fonctionnement, de façon à assurer au palier 10 un fonctionnement optimal.

L'invention est ici décrite pour la rondelle 46 du dispositif d'arrêt supérieur 28, elle peut être mise en oeuvre de façon similaire pour une rondelle interposée entre une bague d'arrêt et la face annulaire d'extrémité inférieure du corps 12.

## Revendications

1. Palier (10) pour le guidage en rotation et le positionnement axial d'un arbre tournant (18), notamment d'un arbre d'entraînement d'un mécanisme d'essuie-glace de véhicule automobile, du type comportant un corps (12) de palier (10) qui comporte un trou (14) dans lequel l'arbre tournant (18) est guidé en rotation autour de son axe (A), et dont la position axiale par rapport au corps (12) de palier (10) est déterminée par une bague d'arrêt (40) qui coopère avec une gorge radiale (42) de l'arbre tournant (18) et qui prend appui axialement sur une face annulaire (44) d'extrémité supérieure du corps (12) de palier (10), avec interposition d'une rondelle (46),
**caractérisé en ce que** la rondelle (46) est arrêtée en rotation par rapport au corps (12) de palier (10).

2. Palier d'entraînement (10) selon la revendication précédente, **caractérisé en ce que** la rondelle (46) se prolonge, à sa périphérie extérieure, par une jupe cylindrique (70) qui s'étend axialement vers le bas et qui est montée serrée sur le tronçon d'extrémité supérieure du corps (12) de palier (10).

3. Palier d'entraînement (10) selon la revendication précédente, **caractérisé en ce qu'**il comporte un capuchon (50) de protection et d'étanchéité qui est traversé par l'arbre tournant (18), et dont une partie inférieure (62) vient en contact avec la paroi cylindrique extérieure (66) du tronçon d'extrémité supérieure du corps (12), et **en ce que** la jupe (70) de la bague d'arrêt retient axialement vers le haut la partie inférieure (62) du capuchon (50).

4. Palier d'entraînement (10) selon l'une quelconque des revendications précédentes, **caractérisé en ce que** la rondelle (46) est bombée avec sa convexité orientée vers le haut, et **en ce que** la bague d'arrêt (40) est en appui axial sur le sommet (74) de sa face supérieure.

5. Palier d'entraînement (10) selon l'une quelconque des revendications précédentes, **caractérisé en ce que** la bague d'arrêt (40) consiste en un anneau élastique ouvert.

6. Palier d'entraînement (10) selon l'une quelconque des revendications 1 à 4, **caractérisé en ce que** la bague d'arrêt (40) consiste en un anneau élastique qui comporte des griffes (48) qui sont réparties sur sa périphérie intérieure et qui coopèrent avec le fond de la gorge (42) pour immobiliser l'anneau par rapport à l'arbre.
